# EUROPÄISCHE PATENTANMELDUNG

(11) **EP 1 348 329 A1**
(43) Veröffentlichungstag der Anmeldung: **01.10.2003**
(21) Anmeldenummer: 03005569.3
(22) Anmeldetag: 12.03.2003
(51) Int. Cl.: A01D 34/68, F16D 55/02

(54) **Arbeitsgerät mit mindestens einem über einen Motor antreibbaren Werkzeug und einer das Werkzeug stillsetzenden Bremse**

(30) Priorität: 30.03.2002 DE 10214419
(71) Anmelder: ESM ENNEPETALER SCHNEID- UND MÄHTECHNIK GMBH & CO. KG, D-58256 Ennepetal (DE)
(72) Erfinder: Jakobs, Helmut, 42499 Hückeswagen (DE); Schlasse, Manfred, 58089 Hagen (DE); Radix, Horst, 58239 Schwerte (DE)
(74) Vertreter: Patentanwälte Rehberg + Hüppe

(57) **Zusammenfassung**

Ein Arbeitsgerät weist mindestens einen Antriebsstrang auf, der eine mit einem Motor verbundene Antriebswelle (1) und eine mit einem Werkzeug verbundene Abtriebswelle (2) besitzt. Es ist eine auf das Werkzeug einwirkenden Bremse (6) mit zwei Teilen vorgesehen, von denen der eine Teil an einem Rahmen (9) des Arbeitsgerätes abgestützt ist, während der andere Teil der Bremse an der mit dem Werkzeug verbundenen Abtriebswelle (2) angreift. Es ist eine Einrichtung zum Verbinden und Trennen der Antriebswelle (1) und der Abtriebswelle (2) vorgesehen. Der andere Teil der Bremse (6) ist relativ zum Antriebsstrang axial verschieblich gelagert. Die Einrichtung zum Verbinden und Trennen der Antriebswelle (1) und der Abtriebswelle (2) weist eine schiefe Ebene (10) zur Erzeugung eines die Bremse (6) automatisch betätigenden axialen Weges und einen Anschlag (12) und einen Gegenanschlag (13) zur Übertragung eines Drehmoments auf.

## Beschreibung

Die Erfindung betrifft ein Arbeitsgerät mit mindestens einem Antriebsstrang, der eine mit einem Motor verbundene Antriebswelle und eine mit einem Werkzeug verbundene Abtriebswelle aufweist, und mit einer auf das Werkzeug einwirkenden Bremse mit zwei Teilen, von denen der eine Teil an einem Rahmen des Arbeitsgerätes abgestützt ist, während der andere Teil der Bremse an der mit dem Werkzeug verbundenen Abtriebswelle angreift, wobei eine Einrichtung zum Verbinden und Trennen der Antriebswelle und der Abtriebswelle vorgesehen ist. Angetriebene Werkzeuge an Arbeitsgeräten müssen aus Sicherheitsgründen nach dem Abschalten des Antriebs in einer limitierten Zeit abgebremst werden. Dies gilt insbesondere für schnell rotierend angetriebene Werkzeuge, wie Rotationsmäher, Schlegelmäher, Sichelmäher, Bodenfräsen, Trenn- und Schleifscheiben. Die Erfindung ist aber auch dann einsetzbar, wenn das Werkzeug anders als rotierend angetrieben wird, beispielsweise in einer hin- und hergehenden Bewegung.

Aus Sicherheitsgründen muss der Bremsvorgang dann ausgelöst bzw. eingeleitet werden, wenn z. B. der Bediener eines Grasmähers den Handkontakt mit den entsprechenden Steuerelementen des Arbeitsgeräts verliert. Dabei ist es bekannt, durch eine sog. Totmannschaltung den Antrieb abzuschalten. Das Nachlaufen des Arbeitswerkzeugs nach dem Abschalten des Antriebs wird durch eine Bremse behindert bzw. verkürzt, die den ausgerückten Zustand infolge des Loslassens verlässt und selbsttätig einrückt.

Ein Arbeitsgerät der eingangs beschriebenen Art ist in Form eines Hochgrasmähers bekannt, der einen auf Rädern verfahrbaren Rahmen besitzt. Als Werkzeug ist ein drehbar gelagerter Mähteller mit Mähelementen vorgesehen. Das Arbeitsgeräte besitzt einen Motor, von dem ein Antriebsstrang zu dem Arbeitswerkzeug führt. Der Antriebsstrang selbst weist eine mit dem Motor verbundene Antriebswelle und eine mit dem Werkzeug verbundene Abtriebswelle auf, die mit parallelen Achsen nebeneinander auf dem Rahmen angeordnet sind. Die Antriebswelle und die Abtriebswelle sind mit je einer Riemenscheibe versehen, über die ein Treibriemen läuft, der von einer Spannrolle auf Spannung gehalten wird, wenn der Antrieb des Motors auf das Werkzeug übertragen werden soll. Dieses bekannte Arbeitsgerät besitzt auch eine Bremse mit zwei Teilen, von denen der eine Teil an dem Rahmen des Arbeitsgerätes abgestützt ist, während der andere Teil der Bremse an der mit dem Werkzeug verbundenen Abtriebswelle angreift. Der eine Teil der Bremse wird von einem an dem Rahmen abgestützten und um eine Bremstrommel geschlungenen Bremsband gebildet, während der andere Teil der Bremse in Form der mit der Abtriebswelle verbundenen Bremstrommel ausgebildet ist. Das eine Ende des Bremsbandes ist in einem Festpunkt am Rahmen und das andere Ende an einem Hebel gelagert, der zugleich die Spannrolle trägt. Am Hebel greift eine Zugfeder in Einrückrichtung der Bremse und zugleich in Ausrückrichtung der Spannrolle an. Auf diese Weise wird eine Einrichtung zum Verbinden und Trennen der Antriebswelle und der Abtriebswelle gebildet. Es ist ein Bowdenzug vorgesehen, der über einen Handhebel betätigt wird. Beim Anziehen dieses Handhebels wird die Bremse entgegen der Kraft der Zugfeder gelöst und die Spannrolle eingerückt, so dass Drehmoment von dem Motor auf das Werkzeug übertragen wird. Beim Loslassen des Handhebels wird die Bremse durch die Kraft der Zugfeder betätigt und die Spannrolle ausgerückt, so dass kein Drehmoment von dem Motor auf das Werkzeug übertragen wird. Der Eintritt der Bremswirkung ist damit von der Stellung des Handhebels abhängig.

Aus der US 4,696,150 ist ein Mähgerät bekannt, welches einen auf einem verfahrbaren Rahmen angeordneten Verbrennungsmotor aufweist. Der Verbrennungsmotor treibt eine Antriebswelle an. Eine Fliehkraftkupplung dient der Übertragung des Antriebsdrehmoments auf eine Abtriebswelle, auf der ein Schneidarm mit zwei Schneiden angeordnet ist. Der Schneidarm bildet das Werkzeug. Es ist eine auf das Werkzeug einwirkende Bremse vorgesehen, die zwei Teile besitzt. Der eine Teil der Bremse besteht aus einem oder mehreren Keilriemen, die fest an einem verschwenkbaren Hebel gelagert sind. Der andere Teil der Bremse wird von einer Bremstrommel gebildet, die mit der Welle in Verbindung steht. Die Keilriemen sind über diese Bremstrommel geschlungen. Mit dem Hebel ist einerseits eine Feder und andererseits ein manuell betätigbarer Bowdenzug verbunden. Die Kraft der Feder bewirkt ein Spannen der Keilriemen und damit die Einleitung einer Bremswirkung auf die Bremstrommel, den Antriebsmotor und das Werkzeug. Entgegen der Kraft der Feder ist die Bremse über eine manuelle Betätigung des Bowdenzugs über den Hebel lösbar. Der Eintritt der Bremswirkung ist also von der Stellung eines Handhebels abhängig.

Bei Arbeitsgeräten mit unterschiedlichen auswechselbaren Werkzeugen, wie z. B. einem Schlegelmähvorsatz, einem Sichelmähvorsatz, einer Bodenfräse u. dgl., tritt der Nachteil auf, dass das Arbeitsgerät je nach dem gerade montierten Werkzeug mit einem unterschiedlichen Steuerungssystem ausgerüstet werden muss. Diese Steuerungssysteme müssen bei jedem Werkzeugwechsel auf der Bedienerseite des Arbeitsgeräts neu installiert werden. Dies ist nicht nur aufwändig, sondern auch sicherheitstechnisch bedenklich.

Der Erfindung liegt die Aufgabe zugrunde, ein Arbeitsgerät der eingangs beschriebenen Art so weiterzubilden, dass die Bremswirkung automatisch als Folge des Ausschaltens des Antriebs eintritt, also unabhängig von bedienerseitigen Steuerbefehlen arbeitet.

Erfindungsgemäß wird dies bei einem Arbeitsgerät der eingangs beschriebenen Art dadurch erreicht, dass der andere Teil der Bremse relativ zum Antriebsstrang axial verschieblich gelagert ist, und dass die Einrichtung zum Verbinden und Trennen der Antriebswelle und der Abtriebswelle eine schiefe Ebene zur Erzeugung eines die Bremse automatisch betätigenden axialen Weges und einen Anschlag und einen Gegenanschlag zur Übertragung eines Drehmoments aufweist.

Die Erfindung geht von dem Gedanken aus, den Bremsvorgang immer dann selbsttätig auszulösen, wenn kein Antriebsmoment anliegt bzw. wenn ein verbleibendes Restantriebsmoment geringer ist als ein Drehmoment des nachlaufenden Werkzeugs. Umgekehrt wird ein anliegendes Drehmoment, also bei eingeschaltetem Motor, dazu genutzt, die Bremse zu lösen und in dem gelösten Zustand zu halten. Ein antriebsseitig anliegendes Drehmoment führt automatisch zum Lösen der Bremse. Ein antriebsseitig abfallendes oder verschwindendes Drehmoment führt automatisch zum Einleiten des Bremsvorgangs, zumindest auf die das Werkzeug tragende Abtriebswelle.

Die konstruktive Ausführung sieht vor, dass der Antriebsstrang keine dauerhaft drehfeste Verbindung darstellt, sondern dass der Antriebsstrang in eine Antriebswelle und eine Abtriebswelle unterteilt ist. In diesem Bereich ist zusätzlich die Bremse mit ihren beiden Teilen vorgesehen. Der eine Teil der Bremse ist an dem Rahmen des Arbeitsgerätes, also ortsfest, abgestützt, während der andere Teil der Bremse an der mit dem Werkzeug verbundenen Abtriebswelle angreift und axial verschiebbar gelagert ist, um letztlich einen axialen Weg zu ermöglichen. Auch die Antriebswelle und/oder die Abtriebswelle können axial verschieblich gelagert sein. Wesentliches Element zum Verbinden bzw. Trennen der Antriebswelle von der Abtriebswelle ist eine schiefe Ebene, die in Verbindung mit einem Nocken, einer Rolle o. dgl. an dem anderen Teil ein Bewegungsspiel innerhalb eines axialen Weges ermöglicht. Dieser axiale Weg wird dazu genutzt, um die Bremse automatisch ein- bzw. auszurücken. Die Ausbildung der schiefen Ebene kann in mehrfacher Weise geschehen. Es kann tatsächlich eine eben oder gekrümmt oder geneigt verlaufende Oberfläche sein, die mit einem Element an einem entsprechenden anderen Teil der schiefen Ebene zusammenarbeitet. Die schiefe Ebene kann auch in Form eines Steilgewindes, einer schrägen Rampe o. dgl. verwirklicht werden. Die zugehörige Bremse ist ein Kraftspeicher zugeordnet, der eine Kraft zur Verfügung stellt, die in Einrückrichtung der Bremse, also zum selbsttätigen Bremsen, ausgebildet und angeordnet ist. Der Kraftspeicher kann von einer Federanordnung gebildet werden. Der über die schiefe Ebene bereitgestellte axiale Weg dient dagegen zum Ausrücken bzw. Lösen der Bremse, also in der anderen Richtung. Neben der schiefen Ebene ist darüber hinaus noch ein Anschlag und ein Gegenanschlag vorgesehen, die bei gelöster Bremse miteinander in Wirkverbindung treten, also aneinander anliegen, um bei eingeschaltetem Motor das Drehmoment auf das betreffende Werkzeug zu übertragen.

Ein Teil der Bremse greift an dem Rahmen des Arbeitsgeräts an. Die Bremse muss auf jeden Fall als solche Teile ortsfest gelagerte Bremselemente besitzen, die z. B. mit einer Bremsscheibe in Wirkverbindung treten, um Energie zu vernichten. Dieser Rahmen des Arbeitsgeräts kann gleichzeitig ein Maschinengestell bilden, auf dem wiederum die einzelnen Elemente, insbesondere der Motor und das Werkzeug, gelagert sind.

Die Bremse weist einen Kraftspeicher auf, der den durch die schiefe Ebene erzeugten axialen Weg überbrückt und bei Ausbleiben einers Antriebsmoments die Bremse einrückt. Bei dem Kraftspeicher handelt es sich um ein Element, welches immer dann eine Kraft zur Verfügung stellt, die in Richtung des Einrückens der Bremse einwirkt, so dass der Bremsvorgang automatisch eintritt, wenn sich die Kraft aus dem Kraftspeicher auswirken kann. Zur Realisierung des Kraftspeichers gibt es verschiedene Möglichkeiten. Eine Möglichkeit besteht in der Anordnung von Druckfedern, die über den axialen Weg gespannt werden und die beim Verschwinden des axialen Weges des Bewegungsspiels der Teile der Bremse ihre Kraft freisetzen, so dass dann die Bremse den Bremsvorgang ausführt. Der Kraftspeicher kann aber auch aus elastisch verformbaren Körpern, insbesondere Kunststoffkörpern, aber auch auf pneumatische oder hydraulische Weise erzeugt bzw. realisiert werden.

Die Bremse kann als eines Teil eine radial zu der Antriebswelle oder der Abtriebswelle abstehende Bremsscheibe aufweisen, die im eingerückten Zustand mit am Rahmen gelagerten Bremselementen zusammenwirkt, die die zweiten Teile bilden. Es muss sich um zumindest eine Bremsscheibe handeln. Es ist natürlich auch möglich, mehrere Bremsscheiben vorzusehen, wie dies bei Lamellenbremsen der Fall ist. Die Bremselemente können aus Reibungselementen bestehen, die ortsfest gelagert sind.

Die Bremse kann auf der Abtriebswelle angeordnet sein. Die Anordnung der Bremse auf der Abtriebswelle stellt sicher, dass auf jeden Fall das nachlaufende Werkzeug in relativ kurzer Zeit abgebremst wird. Es besteht durchaus die Möglichkeit, zusätzlich zu der Bremse noch eine Kupplung in den Antriebsstrang einzuschalten, so dass die Bremse nur das Trägheitsmoment des Werkzeugs abbremsen muss, während der Motor von der Bremse nicht gleichzeitig abgebremst werden muss. Damit wird das von der Bremse abzubremsende Trägheitsmoment auf der Abtriebsseite verringert und die Möglichkeit geschaffen, das Werkzeug noch schneller stillzusetzen.

Es ist sinnvoll, wenn die Bremse die schiefe Ebene und den Gegenanschlag aufweist, während der Anschlag auf der Antriebswelle angeordnet ist. Damit ergibt sich die Möglichkeit, sowohl die Antriebswelle wie auch die Abtriebswelle ortsfest, also nicht axial verschieblich zu lagern. Es ist die Bremse bzw. ein Element der Bremse, welches die schiefe Ebene und den Gegenanschlag trägt und welches die Axialbewegung ausführt. Das betreffende Element der Bremse ist dann verdrehgesichert und axial verschieblich auf der Abtriebswelle gelagert. Dies kann beispielsweise mit Hilfe einer Keilverzahnung realisiert werden.

Es ist sinnvoll, wenn der Gegenänschlag am einen Ende der schiefen Ebene angeordnet ist. Damit ist sichergestellt, dass nach dem Durchlaufen der schiefen Ebene der Gegenanschlag erreicht wird, an dem der Anschlag zur Anlage kommt. Die anschließende Drehmomentübertragung ist damit gesichert.

Gleichgültig, an welchem Element die schiefe Ebene angeordnet ist, besteht die Möglichkeit, dass die schiefe Ebene einen Steigungswinkel etwa im Bereich zwischen 4° und 12° aufweist. Es versteht sich, dass dieser Steigungswinkel je nach der gewünschten Intensität der Bremswirkung gewählt wird. Dabei sind natürlich auch die Reibungsverhältnisse zwischen dem Nocken und der schiefen Ebene zu beachten. Die Reibung kann durch Einschaltung einer drehbaren Rolle, durch abgerundete Gestaltung des Nockens o. dgl. entsprechend verringert werden.

Die Bremse kann auch als Scheibenbremse, Konusbremse oder Lamellenbremse ausgebildet sein. Die Realisierung sämtlicher bekannter Bremsenbauarten ist hier möglich, die durch ein axiales Bewegungsspiel ein- bzw. ausrückbar sind.

Es kann sinnvoll sein, wenn ein zweiter Anschlag und ein zweiter Gegenanschlag vorgesehen sind, um das Bewegungsspiel der Relativverdrehung zwischen Antriebswelle und Abtriebswelle zu begrenzen. Dieser zweite Anschlag und zweite Gegenanschlag sind an sich funktionsnotwendig nicht erforderlich. Durch ihre Anordnung wird sichergestellt, dass die Antriebswelle und die Abtriebswelle sich nur begrenzt gegeneinander verdrehen können, auch in der Drehrichtung, in der sie kein Drehmoment übertragen. Damit wird Schwingungen zwischen Antriebswelle und Abtriebswelle beim Bremsvorgang entgegengewirkt. Es ist sichergestellt, dass sich das Bewegungsspiel der Relativverdrehung immer nur zwischen den beiden Paaren von Anschlägen abspielt, zwischen denen auch die schiefe Ebene angeordnet ist.

Für die Ausbildung des Gegenelementes für die schiefe Ebene gibt es wiederum verschiedene Möglichkeiten. So kann der schiefen Ebene ein Nocken, eine Rolle o. dgl. zugeordnet sein. Auch eine abgerundete Formgebung des Nockens hilft hier, um die Reibung zu vermindern und das axiale Bewegungsspiel feinfühlig herbeizuführen.

Die Erfindung wird anhand verschiedener Ausführungsformen sowohl prinzipiell wie konstruktiv und unter Hinweis auf die anliegenden Zeichnungen weiter verdeutlicht. Es zeigen:
- Fig. 1: eine schematisierte Seitenansicht der für die Erfindung wesentlichen Teile während des Übertragens eines Drehmomentes im Antriebsstrang,
- Fig. 2: einen Schnitt gemäß der Linie II-II in Fig. 1,
- Fig. 3: eine schematisierte Seitenansicht der Elemente gemäß Fig. 1 in der Bremsstellung,
- Fig. 4: einen Schnitt gemäß der Linie IV-IV in Fig. 3,
- Fig. 5: eine Seitenansicht einer weiteren Ausführungsform, bei der die schiefe Ebene durch eine gewindegangartig angeordnete Rampe gebildet wird, in der Stellung, in der ein Drehmoment übertragen wird,
- Fig. 6: einen Schnitt gemäß der Linie VI-VI in Fig. 5,
- Fig. 7: eine Ansicht auf die Elemente gemäß Fig. 5 in der gebremsten Stellung,
- Fig. 8: einen Schnitt gemäß der Linie VIII-VIII in Fig. 7,
- Fig. 9: eine schematisierte Seitenansicht der für die Erfindung wesentlichen Teile während des Übertragens eines Drehmomentes im Antriebsstrang bei einer weiteren Ausführungsform,
- Fig. 10: einen Schnitt gemäß der Linie X-X in Fig. 9,
- Fig. 11: eine schematisierte Seitenansicht der Elemente gemäß Fig. 9 in der Bremsstellung,
- Fig. 12: einen Schnitt gemäß der Linie XII-XII in Fig. 11,
- Fig. 13: eine Darstellung einer mehr konstruktiven Ausführungsform der Bremse als Scheibenbremse bei gelöster Bremse,
- Fig. 14: die Ausführungsform gemäß Fig. 13 in der festgebremsten Stellung,
- Fig. 15: eine Darstellung einer mehr konstruktiven Ausführungsform der Bremse bei einer Lamellenbremse,

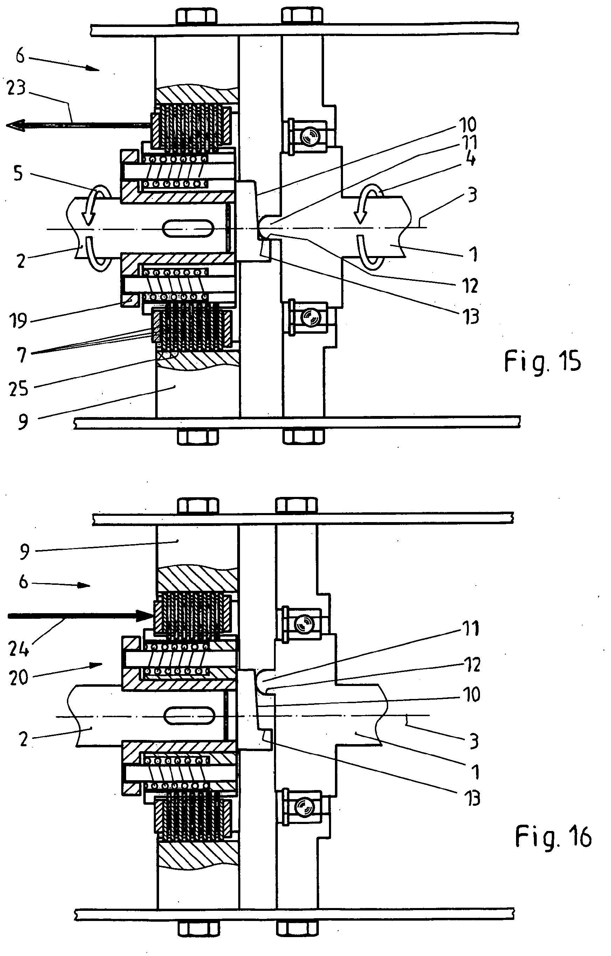

- Fig. 15: die Ausführungsform gemäß Fig. 15 in der festgebremsten Stellung.

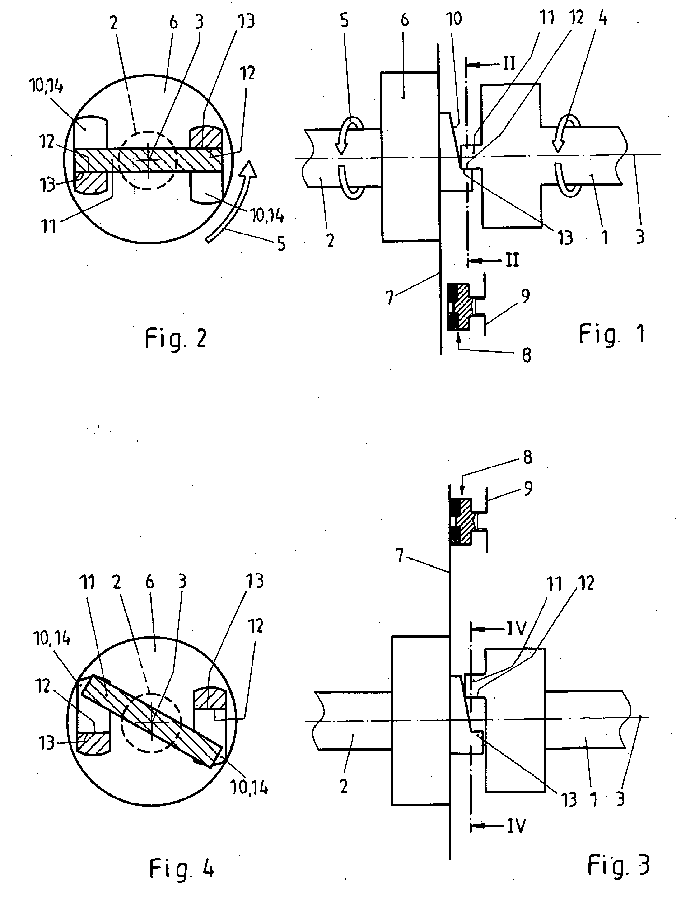

In Fig. 1 sind die für die Erfindung wesentlichen Elemente schematisch wiedergegeben. Fig. 1 zeigt die Unterbrechungsstelle zwischen einer Antriebswelle 1 und einer Abtriebswelle 2, die mit gemeinsamer Achse 3 fluchtend zueinander gelagert sind. Die Antriebswelle 1 möge in Richtung eines Pfeils 4 angetrieben werden, so dass auch die Abtriebswelle 2 in der gleichen Richtung gemäß Pfeil 5 angetrieben wird.

Auf der Abtriebswelle 2 sitzt eine Bremse 6, die mit der Abtriebswelle 5 drehfest verbunden ist. Die von der Abtriebswelle 2 und der Bremse 6 gebildete Einheit ist in Richtung der Achse 3 verschiebbar gelagert und angeordnet, wie ein Vergleich der Fig. 1 und 3 zeigt, während die Antriebswelle 1 eine solche axiale Verschiebemöglichkeit nicht aufweist. Die Bremse 6 besitzt eine Bremsscheibe 7, die mit einem schematisch angedeuteten Bremselement 8 zusammenwirkt (Fig. 1 und 3). Das Bremselement 8 ist hier nur schematisch angedeutet. Bei konstruktiver Ausführungsform sind eine Anzahl Bremselemente 8 über den Umfang gleichmäßig verteilt vorgesehen. Das Bremselement 8 bzw. die Bremselemente 8 sind ortsfest an einem Rahmen 9 gelagert, der auch das Gestell des Arbeitsgeräts bilden oder mit diesem in Verbindung stehen kann.

Es versteht sich, dass die Antriebswelle 1 die Antriebsseite darstellt, also mit einem nicht dargestellten Motor, insbesondere Elektromotor, verbunden ist. Entsprechend symbolisiert die Abtriebswelle 2 die Abtriebsseite. Hier besteht Verbindung zu einem nicht dargestellten Werkzeug des Arbeitsgeräts.

Die Bremse 6 weist weiterhin eine schiefe Ebene 10 auf. Der schiefen Ebene 10 ist ein Nocken 11 zugeordnet, der auf der Seite der Antriebswelle 1 vorgesehen ist. Bei einer Relativverdrehung der Antriebswelle 1 zu der Abtriebswelle 2 gleitet der Nocken 11, je nach Drehrichtung, an der schiefen Ebene 10 entlang und verschiebt damit die Einheit aus Abtriebswelle 2 und Bremse 6 in Richtung der Achse 3 in einem durch die schiefe Ebene bereitgestellten Bewegungsspiel bzw. einem axialen Weg. Dieser axiale Weg ist mindestens gleich groß, vorzugsweise größer, als es das Bewegungsspiel zwischen der Bremsscheibe 7 und den Bremselementen 8 zum Lösen bzw. Einrücken der Bremse 6 erfordert.

An dem Nocken 11 wird in Antriebsrichtung gemäß den Pfeilen 4 und 5 ein erster Anschlag 12 gebildet, dem ein Gegenanschlag 13 an der Bremse 6 zugeordnet ist. Der Gegenanschlag 13 kann vorteilhaft am Ende der schiefen Ebene 10 vorgesehen bzw. gebildet werden.

Fig. 2 lässt erkennen, dass die schiefe Ebene 10 in Form zweier schräger Rampen 14 an der Bremse 6 bzw. einem Teil davon doppelt vorgesehen ist. Der Nocken 11 an der Antriebswelle 1 erstreckt sich über einen Durchmesser durchgehend, so dass von ihm der Anschlag 12 doppelt gebildet wird. Entsprechend enden die schrägen Rampen 14 in doppelt vorgesehenen Gegenanschlägen 13.

Bei ausgeschaltetem Motor, stillstehendem Werkzeug befinden sich die Teile in der in den Fig. 3 und 4 erkennbaren festgebremsten Stellung. Sobald der Motor eingeschaltet wird, wird sich die Antriebswelle 1 in Richtung des Pfeils 4 in Bewegung setzen, während die Abtriebswelle 2 noch weiterhin stillsteht. Demzufolge wird sich der Nocken 11 an der schiefen Ebene so relativverschieben und verlagern, bis die in den Fig. 1 und 2 erkennbare Stellung erreicht ist. Hierdurch wird die Einheit aus Abtriebswelle 2 und Bremse 6 in Richtung der Achse 3 verschoben und die Bremse 6 gelöst. Am Ende dieser Bewegung trifft der Anschlag 12 auf den Gegenanschlag 13 auf, so dass die Abtriebswelle mit der gleichen Drehzahl mitgenommen wird und umläuft wie die Antriebswelle 1. Es ergibt sich die in den Fig. 1 und 2 erkennbare Stellung während der Übertragung des Drehmomentes, also während des Arbeitens mit dem Werkzeug des Arbeitsgeräts.

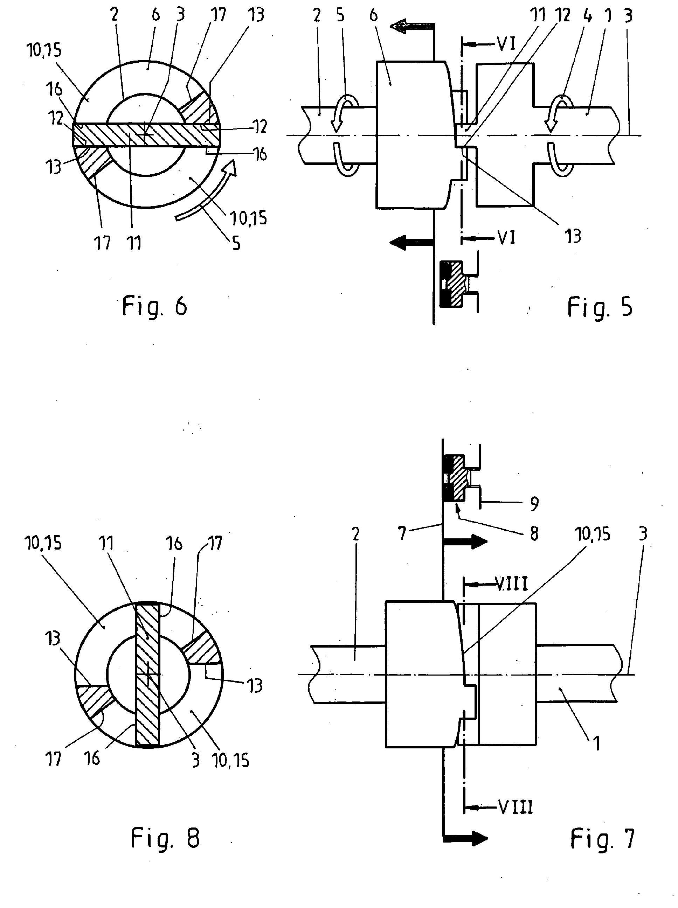

Zur Beendigung des Arbeitens mit dem Werkzeug wird der Motor ausgeschaltet, was beispielsweise über eine Totmannschaltung geschehen kann. In der Folge dieses Abschaltvorganges wird sich das antriebsseitige Drehmoment verringern und schließlich wegfallen, so dass die Antriebswelle mit einer vergleichsweise niedrigeren Drehzahl umläuft als die nachfolgende Abtriebswelle 2 mit dem Werkzeug. Demzufolge wird nunmehr der axiale Weg in der anderen Richtung durchschritten, indem der Nocken 11 an der schiefen Ebene 10 entlangläuft, bis schließlich die Stellung gemäß den Fig. 3 und 4 erreicht wird. Dabei wird gleichzeitig die Bremse 6 eingerückt, indem die Bremsscheibe 7 an den Bremselementen 8 zur Anlage kommt. Infolge dieses Bremsvorgangs wird nunmehr auch die Abtriebswelle 2 stillgesetzt. Anhand der Fig. 5 bis 8 wird ein zweites Ausführungsbeispiel der Erfindung prinzipiell verdeutlicht, wobei hier die schiefe Ebene 10 nicht als ebene Fläche, sondern als gewindeartige Rampe 15 doppelt vorgesehen ist. Bei dieser Ausführungsform ist noch ein weiteres Anschlagspaar in der anderen Drehrichtung vorgesehen, nämlich ein zweiter Anschlag 16 an dem Nocken 11 sowie ein zugehöriger Gegenanschlag 17 an der Bremse 6, jeweils in doppelter Ausfertigung.

Bezüglich der Funktion kann zunächst auf das Ausführungsbeispiel der Fig. 1 bis 4 hingewiesen werden. Durch die zusätzliche Anordnung von zwei Anschlägen 16 und zwei Gegenanschlägen 17 ist sichergestellt, dass das relative Bewegungsspiel zwischen der Antriebswelle 1 und der Abtriebswelle 2 auf den von den Anschlägen eingeschlossenen Winkel begrenzt ist. In diesem Bereich ist auch die schiefe Ebene 10 vorgesehen. Damit wird sichergestellt, dass Relativausschläge der Teile zueinander, auch beim Auftreten von Schwingungen, Stößen u. dgl. in Gegenrichtung begrenzt werden, so dass damit sichergestellt ist, dass sich die Teile nur in einem begrenzten Bewegungsspiel zueinander verdrehen können. Die schiefe Ebene kommt damit immer je nach Relativverdrehung zum Einsatz bzw. zur Wirkung.

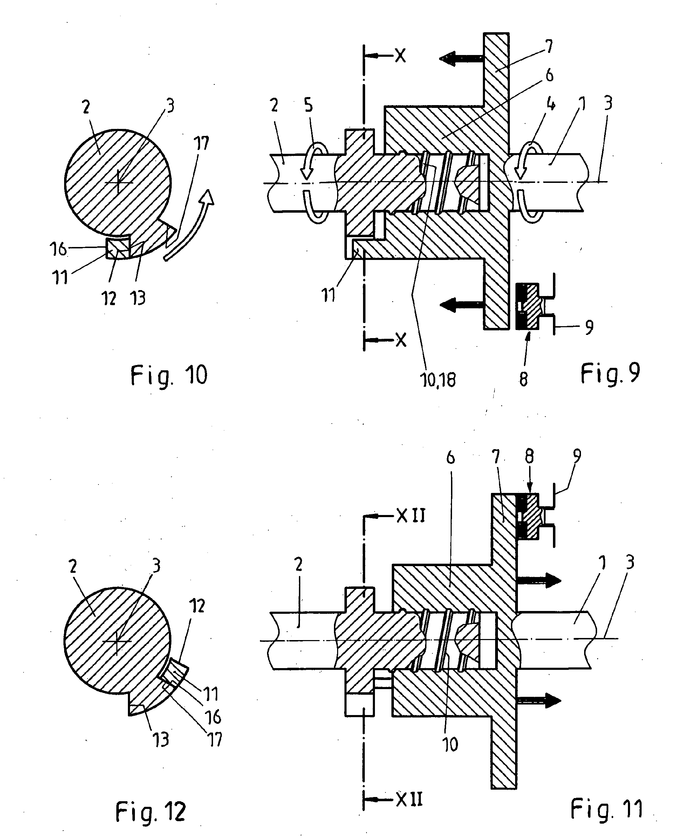

In den Fig. 9 bis 12 ist eine weitere Ausführungsmöglichkeit verdeutlicht. Es ist erkennbar, dass hier die Bremse 6 auf der Seite der Antriebswelle 1 angeordnet ist. Demzufolge ist hier die Einheit aus Antriebswelle 1 und Bremse 6 axialverschieblich gelagert. Die schiefe Ebene 10 ist hier in Form eines Gewindes 18 verwirklicht. Auch diese Ausführungsform kann mit und ohne zweitem Anschlag 16 und zweitem Gegenanschlag 17 verwirklicht werden.

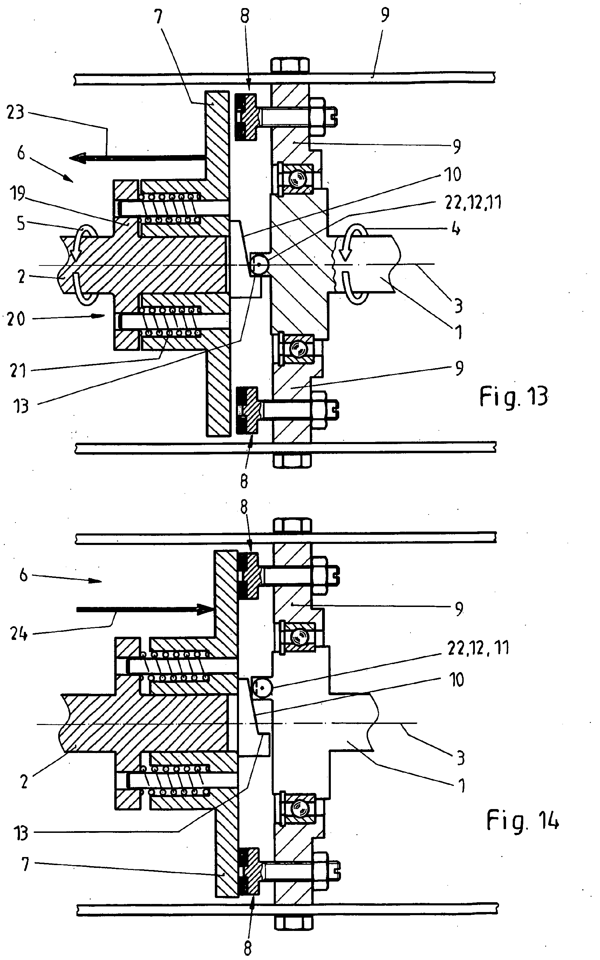

Die Fig. 13 und 14 zeigen eine mehr konstruktive Ausführungsform in Ausführung der Bremse 6 als Scheibenbremse. Die Bremse 6 besitzt ein Gehäuse 19 und die Bremsscheibe 7. Das Gehäuse 19 ist drehfest und axial unverschieblich auf der Abtriebswelle 2 angeordnet. Die Bremsscheibe 7 trägt die schiefe Ebene 10 und ist zusammen mit dieser axial in Richtung der Achse 3 verschiebbar. Zwischen dem Gehäuse 19 und der Bremsscheibe 7 ist ein Kraftspeicher 20 mit mehreren Druckfedern 21 vorgesehen, der bestrebt ist, die Bremsscheibe 7 in Richtung auf die am Rahmen 9 angeordneten Bremselemente 8 zu verschieben. Der Nocken 11 ist hier in Form einer Rolle 22 an der Antriebswelle 1 bzw. einer Verdickung davon angeordnet, die gleichzeitig zur Lagerung der Antriebswelle 1 mit den dargestellten Kugellagern im Bereich des Rahmens 9 dient. Die Rolle 22 übernimmt gleichzeitig die Funktion des ersten Anschlags 12.

Es ist erkennbar, dass gemäß Fig. 13 die Bremse 6 gelöst ist. Drehmoment wird von der Antriebswelle 1 auf die Abtriebswelle 2 übertragen. Da die Rolle 22 an der schiefen Ebene 10 aufgeglitten ist, ist der axiale Weg zurückgelegt. Ein Pfeil 23 verdeutlicht die von der schiefen Ebene 10 übertragene Axialkraft auf die Bremsscheibe 7, die die Druckfedern 21 des Kraftspeichers 20 zusammengedrückt hält.

Fig. 14 verdeutlicht die Bremsstellung, nachdem das Antriebsdrehmoment an der Antriebswelle 1 verschwunden ist. Die Druckfedern 21 des Kraftspeichers 20 haben die Bremsscheibe 7 gemäß Pfeil 24 so weit verschoben, dass diese in Anlage an die Bremselemente 8 getreten ist, so dass die Abtriebswelle 2 abgebremst ist.

Das Ausführungsbeispiel der Fig. 15 und 16 zeigt die Ausbildung der Bremse 6 als Lamellenbremse. Hier gibt es mehrere Bremsscheiben 7, die drehfest mit dem Gehäuse 19 verbunden sind, während ein Satz weiterer Bremsscheiben 25 mit dem Rahmen 9 in Verbindung steht. Eine solche Lamellenbremse benötigt nur einen relativ geringen axialen Weg zum Öffnen und Schließen, weshalb die schiefe Ebene 10 hier in einem vergleichsweise geringen Neigungswinkel von etw 4° dargestellt ist. Auch hier ist wie bei allen Ausführungsformen ein Kraftspeicher 20 vorgesehen. Der Nocken 11 am Ende der Antriebswelle 1 besitzt hier eine abgerundete Gestalt.

Anhand der verschiedenen Ausführungsformen ist erkennbar, dass entweder die Antriebswelle 1, die Abtriebswelle 2 oder ein wesentliches Element der Bremse 6, beispielsweise die Bremsscheibe 7, in Richtung der Achse 3 axial verschiebbar sein müssen. Der zur Betätigung der Bremse 6 erforderliche Weg wird über eine schiefe Ebene 10 bereit gestellt, so dass die Bremse 6 selbsttätig in Abhängigkeit von der Relativverdrehung zwischen Antriebswelle 1 und Abtriebswelle 2 eingerückt oder gelöst ist.

### BEZUGSZEICHENLISTE

- 1 -: Antriebswelle
- 2 -: Abtriebsweele
- 3 -: Achse
- 4 -: Pfeil
- 5 -: Pfeil
- 6 -: Bremse
- 7 -: Bremsscheibe
- 8 -: Bremselement
- 9 -: Rahmen
- 10 -: schiefe Ebene
- 11 -: Nocken
- 12 -: Anschlag
- 13 -: Gegenanschlag
- 14 -: Rampe
- 15 -: Rampe
- 16 -: Anschlag
- 17 -: Gegenanschlag
- 18 -: Gewinde
- 19 -: Gehäuse
- 20 -: Kraftspeicher
- 21 -: Druckfeder
- 22 -: Rolle
- 23 -: Pfeil
- 24 -: Pfeil
- 25 -: Bremsscheibe

## Patentansprüche

1. Arbeitsgerät mit mindestens einem Antriebsstrang, der eine mit einem Motor verbundene Antriebswelle (1) und eine mit einem Werkzeug verbundene Abtriebswelle (2) aufweist, und mit einer auf das Werkzeug einwirkenden Bremse (6) mit zwei Teilen, von denen der eine Teil an einem Rahmen (9) des Arbeitsgerätes abgestützt ist, während der andere Teil der Bremse an der mit dem Werkzeug verbundenen Abtriebswelle (2) angreift, wobei eine Einrichtung zum Verbinden und Trennen der Antriebswelle (1) und der Abtriebswelle (2) vorgesehen ist, **dadurch gekennzeichnet, dass** der andere Teil der Bremse (6) relativ zum Antriebsstrang axial verschieblich gelagert ist, und dass die Einrichtung zum Verbinden und Trennen der Antriebswelle (1) und der Abtriebswelle (2) eine schiefe Ebene (10) zur Erzeugung eines die Bremse (6) automatisch betätigenden axialen Weges und einen Anschlag (12) und einen Gegenanschlag (13) zur Übertragung eines Drehmoments aufweist.

2. Arbeitsgerät nach Anspruch 1, **dadurch gekennzeichnet, dass** die Bremse (6) einen Kraftspeicher (20) aufweist, der den durch die schiefe Ebene (10) erzeugten axialen Weg überbrückt und bei Ausbleiben einers Antriebsmoments die Bremse (6) einrückt.

3. Arbeitsgerät nach Anspruch 1 oder 2, **dadurch gekennzeichnet, dass** die Bremse (6) eine radial zu der Antriebswelle (1) oder der Abtriebswelle (2) abstehende Bremsscheibe (7) aufweist, die im eingerückten Zustand mit am Rahmen (9) gelagerten Bremselementen (8) zusammenwirkt.

4. Arbeitsgerät nach einem der Ansprüche 1 bis 3, **dadurch gekennzeichnet, dass** der andere Teil der Bremse (6) auf der Abtriebswelle (2) axial verschiebbar angeordnet ist.

5. Arbeitsgerät nach einem der Ansprüche 1 bis 4, **dadurch gekennzeichnet, dass** die Bremse (6) die schiefe Ebene (10) und den Gegenanschlag (13) aufweist, während der Anschlag (12) auf der Antriebswelle (1) angeordnet ist.

6. Arbeitsgerät nach Anspruch 5, **dadurch gekennzeichnet, dass** der Gegenanschlag (13) am einen Ende der schiefen Ebene (10) angeordnet ist.

7. Arbeitsgerät nach einem der Ansprüch 1 bis 6, **dadurch gekennzeichnet, dass** die schiefe Ebene (10) einen Steigungswinkel etwa im Bereich zwischen 4° und 12° aufweist.

8. Arbeitsgerät nach einem der Ansprüche 1 bis 7, **dadurch gekennzeichnet, dass** die Bremse (6) als Scheibenbremse, Konusbremse oder Lamellenbremse ausgebildet ist.

9. Arbeitsgerät nach einem der Ansprüche 1 bis 8, **dadurch gekennzeichnet, dass** ein zweiter Anschlag (16) und ein zweiter Gegenanschlag (17) vorgesehen sind, um das Bewegungsspiel der Relativverdrehung zwischen Antriebswelle (1) und Abtriebswelle (2) zu begrenzen.

10. Arbeitsgerät nach einem der Ansprüche 1 bis 9, **dadurch gekennzeichnet, dass** der schiefen Ebene (10) ein Nocken (11), eine Rolle (22) o. dgl. zugeordnet ist.
